# FASCICULE DE BREVET EUROPEEN

(11) **EP 2 499 092 B1**
(45) Date de publication et mention de la délivrance du brevet: **17.04.2019**
(21) Numéro de dépôt: 10787507.2
(22) Date de dépôt: 04.11.2010
(51) Int. Cl.: C04B 35/447, C04B 35/626, C04B 35/645, H01M 4/136, H01M 4/58, H01M 10/052, C01B 25/455, C04B 35/553

(54) **SYNTHÈSE D'UN FLUOROPHOSPHATE MÉTALLIQUE**
SYNTHESE EINES METALL-FLUOROPHOSPHATS
SYNTHESIS OF A METAL FLUOROPHOSPHATE

(30) Priorité: 10.11.2009 FR 0905405
(43) Date de publication de la demande: 19.09.2012
(73) Titulaire: Commissariat à l'Énergie Atomique et aux Énergies Alternatives, 75015 Paris (FR); Centre National de la Recherche Scientifique, 75794 Paris Cedex 16 (FR)
(72) Inventeur: PATOUX, Sébastien, F-38600 Fontaine (FR); BOURBON, Carole, F-38590 Saint-Michel de Saint-Geoirs (FR); DUMONT-BOTTO, Erwan, F-33300 Bordeaux (FR); DOLLE, Mickael, F-31190 Miremont (FR); ROSIER, Patrick, F-31400 Toulouse (FR)
(74) Mandataire: Talbot, Alexandre
(86) Numéro de dépôt international: PCT/FR2010/000735
(87) Numéro de publication internationale: WO 2011/058239

(56) Documents cités:
- EP-A1- 0 992 468
- EP-A2- 1 574 477
- WO-A2-2008/037765
- US-A1- 2002 192 553
- RECKHAM N ET AL: "Ionothermal Synthesis of Li-Based Fluorophosphates Electrodes", CHEMISTRY OF MATERIALS, AMERICAN CHEMICAL SOCIETY, WASHINGTON, US LNKD- DOI:10.1021/CM9021497, vol. 22, 11 avril 2009 (2009-04-11), pages 1142-1148, XP002568190, ISSN: 0897-4756 [extrait le 2009-11-04]
- CHANG ET AL: "Spark plasma sintering of Al substituted LiHf2(PO4)3 solid electrolytes", SOLID STATE IONICS, NORTH HOLLAND PUB. COMPANY. AMSTERDAM; NL, NL LNKD- DOI:10.1016/J.SSI.2005.07.010, vol. 176, no. 35-36, 15 novembre 2005 (2005-11-15), pages 2583-2587, XP005099740, ISSN: 0167-2738
- KOBAYASHI Y ET AL: "DENSIFICATION OF LITI2(PO4)3-BASED SOLID ELECTROLYTES BY SPARK- PLASMA-SINTERING", JOURNAL OF POWER SOURCES, ELSEVIER SA, CH LNKD- DOI:10.1016/S0378-7753(99)00121-4, vol. 81/82, 1 janvier 1999 (1999-01-01), pages 853-858, XP000863654, ISSN: 0378-7753
- J.-S. LEE, C.-M. CHANG, Y. I. LEE, J.-H. LEE, S.-H. HONG: "Spark Plasma Sintering (SPS) of NASICON Ceramics", J. AM. CERAM. SOC., vol. 87, no. 2, 7 juillet 2008 (2008-07-07), pages 305-307, XP002591676,
- C.-M. CHANG, Y. I. LEE, S.-H. HONG: "Spark Plasma Sintering of LiTi2(PO4)3-Based Solid Electrolytes", J. AM. CERAM. SOC., vol. 88, no. 7, 12 mai 2005 (2005-05-12), pages 1803-1807, XP002591677,
- Z. WENG, X. XU, J. LI: "Preparation, Microstructure and Electrical Properties of Li1,4Al0,4Ti1,6(PO4)3 nanoceramics", J. ELECTROCERAM., vol. 22, 12 février 2008 (2008-02-12), pages 342-345, XP002591678,

## Description

### Domaine technique de l'invention

L'invention concerne un procédé de synthèse d'un fluorophosphate métallique de formule générale (2) suivante:

X₂M'PO₄F (2)

dans laquelle :
X est un métal alcalin choisi parmi le sodium (Na) et le lithium (Li) ou un mélange desdits métaux ;
M' est un métal de transition choisi parmi les éléments suivants : Co, Ni, Fe, Mn, Cu, X, M', PO₄, F, étant choisis de façon à maintenir l'électroneutralité du fluorophosphate métallique.

### État de la technique

Depuis l'émergence des accumulateurs au lithium, plusieurs générations de matériaux d'électrode positive ont successivement fait leur apparition.

Les composés actifs d'électrodes utilisés dans les accumulateurs commerciaux actuels sont, pour l'électrode positive, des composés lamellaires tels que LiCoO₂, LiNiO₂ et les mixtes Li(Ni, Co, Mn, Al)O₂ ou des composés de structure spinelle de composition proche de LiMn₂O₄. L'électrode négative est généralement du carbone (graphite, coke,...) ou éventuellement le spinelle Li₄Ti₅O₁₂ ou un métal formant un alliage avec le lithium (Sn, Si, ...). Les capacités spécifiques théoriques et pratiques des composés d'électrode positive cités sont respectivement d'environ 275 mAh.g⁻¹ et 140 mAh.g⁻¹ pour les oxydes de structure lamellaire (LiCoO₂ et LiNiO₂) et 148 mAh.g⁻¹ et 120 mAh.g⁻¹ pour le spinelle LiMn₂O₄. Dans tous les cas, pour les électrodes positives, une tension de fonctionnement par rapport au lithium métallique voisine de 4 Volts est obtenue.

Depuis quelques années, des matériaux à structures tridimensionnelles construites à partir d'entités polyanioniques de type XOₙ^{m-}, avec X = P, S, Mo, W... suscitent un réel engouement dans le domaine des accumulateurs notamment au lithium et, plus particulièrement, les orthophosphates de structure olivine et de formule générale LiMPO₄, avec M = Fe, Mn, Co, Ni. Le plus étudié d'entre eux est le phosphate de fer lithié, LiFePO₄, dont l'intérêt en termes de stabilité, de sécurité et de coût en fait un matériau fortement intéressant pour les applications automobiles électriques et solaires.

Le document US-A-2010028676 fait, par exemple, mention d'un procédé de synthèse basse température d'orthophosphates LiMPO₄ permettant d'obtenir des résultats pratiques améliorés par rapport à l'art antérieur.

De récents travaux sur des fluorophosphates métalliques ont suscité un intérêt via des capacités théoriques prometteuses comme matériaux actifs d'électrode d'accumulateur au lithium et également, d'électrode d'accumulateur au sodium.

Le fluor offre, par ailleurs, l'avantage d'élargir le choix des matériaux d'électrode en proposant de nouveaux composés et de nouvelles structures. En outre, le fluor est un élément très électronégatif (attracteur d'électrons) qui peut créer, dans certains cas, un effet inductif non négligeable et augmenter de ce fait le potentiel d'oxydo-réduction de l'élément de transition mis en jeu.

Ces accumulateurs à base de fluorophosphates métalliques sont aptes à répondre aux exigences en énergie massique dans le domaine de l'alimentation autonome.

Certains de ces fluorophosphates métalliques sont des candidats prometteurs pour une utilisation comme matériau actif d'électrode d'accumulateur lithium-ion ou sodium-ion. Parmi eux, les fluorophosphates métalliques de formule générale (1) suivante sont particulièrement prometteurs :

XₐM_{b}(PO₄)_{c}F_{d} (1)

dans laquelle :
X est un métal alcalin choisi parmi Na et Li ou un mélange desdits métaux ; M est un métal de transition choisi parmi les éléments suivants : Co, Ni, Fe, Mn, V, Cu, Ti, Al, Cr, Mo, Nb ou une combinaison d'au moins deux desdits métaux,
0 ≤ a ≤5 ; 0,5 ≤ b ≤3 ; 0,5 ≤ c ≤3 ; et
d est un entier égal à 1, 2 ou 3.

Néanmoins, à l'heure actuelle la synthèse de ces fluorophosphates métalliques s'avère difficile et donne des résultats médiocres du fait notamment du caractère volatile des composés fluorés. En effet, les procédés de synthèse conventionnelles des fluorophosphates métalliques consistent à mélanger les précurseurs du fluorophosphate sous forme de poudre et de les chauffer généralement dans un four, pour faire réagir les précurseurs entre-eux. Cette synthèse par voie solide est fastidieuse et nécessite un traitement thermique de longue durée, responsable de pertes importantes en composés fluorés, dues à une perte de fluor lors de la mise en contact du précurseur fluoré avec l'humidité ambiante, et de faibles rendements.

À titre d'exemple, le document US-A-20020192553 divulgue un procédé de synthèse d'un matériau actif pour électrode d'accumulateur au sodium de formule Li_{1-z}Na_{z}MPO₄F dans laquelle 0<z<1 et M est un métal de transition choisi parmi V, Mn, Fe, Co, Cu, Ni, Ti ou un mélange de ceux-ci. Le fluorophosphate de sodium est obtenu à partir d'une poudre d'oxyde de phosphate métallique et d'un fluorure de sodium ou de lithium, par chauffage jusqu'à ce que la réaction entre les deux précurseurs se produise. Un fluorophosphate mixte de vanadium et de sodium (NaVPO₄F) est, par exemple, synthétisé à partir d'un mélange de phosphate de vanadium VPO₄ et de fluorure de sodium (NaF). Le mélange homogène transféré dans un four tubulaire, est soumis à un traitement thermique par élévation de la température à une vitesse de 2°C.min⁻¹ jusqu'à 750°C puis maintenu à cette température durant 1 heure.

Dans l'article "Fluoride phosphate Li2CoPO4F as a high-voltage cathode in Li-ion batteries" (Journal of Power Sources, 146 (2005) p.565-569), S. Okada et al. décrivent un procédé de synthèse d'un fluorophosphate mixte de cobalt et lithium préparé en plusieurs étapes à partir d'un phosphate de cobalt et de lithium et d'un fluorure de lithium. On note que la dernière étape de synthèse est laborieuse et gourmande en énergie puisqu'elle nécessite 78 heures de traitement à 780°C dans un tube en quartz sous vide.

Dans l'article "Ionothermal Synthesis of Li-Based Fluorophosphates electrodes" (Chemistry of Materials, American Chemical Society, vol.22, (2009/04/11), p. 1142-1148), Reckham et al. proposent une alternative en décrivant la synthèse de fluorophosphates par voie liquide ionothermique c'est-à-dire en utilisant des précurseurs sous forme solvatée et à faible température.

### Objet de l'invention

L'invention a pour but un procédé de synthèse d'un fluorophosphate métallique facile à mettre en oeuvre, permettant l'obtention d'un grand nombre de composés fluorophosphates avec un rendement élevé.

L'invention a également pour but un procédé de synthèse d'un fluorophosphate métallique industrialisable.

Selon l'invention, ce but est atteint par un procédé de synthèse selon la revendication 1.

### Description sommaire des dessins

D'autres avantages et caractéristiques ressortiront plus clairement de la description qui va suivre de modes particuliers de réalisation de l'invention donnés à titre d'exemples non-limitatifs et représentés aux dessins annexés, dans lesquels :
- La figure 1 représente, schématiquement et en coupe, un dispositif de frittage activé par champ électrique.
- La figure 2 est un graphique représentant le diagramme de diffraction des rayons X (λ_{CuKα}) d'un fluorophosphate mixte de cobalt et de lithium de formule Li₂CoPO₄F synthétisé selon un mode particulier de réalisation de l'invention.
- Les figures 3 et 4 sont des graphiques représentant les diagrammes de diffraction des rayons X (λ_{CuKα}), respectivement, du fluorure de lithium (LiF) et du phosphate mixte de cobalt et de lithium de formule LiCoPO₄.
- La figure 5 représente un cliché obtenu par microscopie électronique à balayage, à un grossissement de 6 000 fois, du composé Li₂CoPO₄F synthétisé selon un mode particulier de réalisation de l'invention.
- La figure 6 est un graphique représentant le diagramme de diffraction des rayons X (λ_{CuKα}) d'un fluorophosphate mixte de cobalt et de sodium de formule Na₂CoPO₄F synthétisé selon un mode particulier de réalisation de l'invention.
- Les figures 7 et 8 sont des graphiques représentant les diagrammes de diffraction des rayons X (λ_{CuKα}), respectivement, du fluorure de sodium (NaF) et du phosphate mixte de cobalt et de lithium de formule NaCoPO₄.
- La figure 9 représente un cliché obtenu par microscopie électronique à balayage, à un grossissement de 6 000 fois, d'un composé Na₂CoPO₄F synthétisé selon un mode particulier de réalisation de l'invention.
- La figure 10 représente les courbes de charge/décharge en mode intentiostatique, en régime C/10, à 20°C, d'un accumulateur au lithium de type Li-Ion comportant un fluorophosphate métallique mixte de cobalt et de lithium (Li₂CoPO₄F) synthétisé selon un mode particulier de réalisation de l'invention.
- La figure 11 représente l'évolution de la capacité spécifique en charge (C) et en décharge (D) en fonction du nombre de cycles effectués dans le cas d'un accumulateur selon la figure 10.

### Description de modes particuliers de réalisation

Selon un mode de réalisation particulier, un fluorophosphate métallique est synthétisé en faisant réagir au moins deux précurseurs solides du fluorophosphate métallique mis sous forme d'un mélange de poudres puis soumis à un traitement thermique réalisé par frittage activé par champ électrique.

Le fluorophosphate métallique est un fluorophosphate métallique de formule générale (2) suivante :

X₂M'PO₄F (2)

dans laquelle
M' est un métal de transition choisi parmi Co, Ni, Fe, Mn, Cu, et
X est un métal alcalin choisi parmi Na et Li ou un mélange desdits métaux.

Le procédé de synthèse est, particulièrement, avantageux pour un fluorophosphate métallique mixte de cobalt, de préférence, choisi parmi Li₂CoPO₄F et Na₂CoPO₄F.

Le mélange de précurseurs solides du fluorophosphate métallique est formé par au moins un premier précurseur à base de phosphate et au moins un second précurseur à base de fluor.

Le premier précurseur à base de phosphate est, avantageusement, choisi parmi un phosphate métallique, un phosphate de sodium et un phosphate d'ammonium.

Le phosphate métallique est, avantageusement, choisi parmi FePO₄, MnPO₄, Co₃(PO₄)₂, Li₃PO₄, LiFePO₄, LiCoPO₄, NaCoPO₄, LiMnPO₄, LiNiPO₄, et leurs hydrates. À titre d'exemple non-limitatif, l'hydrate peut être du MnPO₄ hydraté ou du FePO₄ hydraté.

Le phosphate d'ammonium est, de préférence, choisi parmi NH₄H₂PO₄, (NH₄)₂HPO₄, NaNH₄HPO₄ et leurs hydrates.

Le phosphate de sodium peut être, par exemple, NaH₂PO₄ et ses hydrates.

Le second précurseur, à base de fluor, est un fluorure métallique choisi de parmi les fluorures de métaux alcalins, choisi parmi NaF et LiF. Alternativement, le fluorure métallique est choisi parmi le fluorure d'ammonium NH₄F et les fluorures de métaux de transition, choisi parmi MnF₂, CoF₂, NiF₂, TiF₂, FeF₂, FeF₂ hydraté.

Le mélange de précurseurs peut également comporter un troisième précurseur choisi parmi un oxyde métallique MO, un hydroxyde métallique M(OH)₂, un acétate métallique M(CH₃COO)₂ un carbonate métallique MCO₃, un nitrate métallique M(NO₃)₃, un sulfate métallique MSO₄, un oxalate métallique MC₂O₄ et un oxohydroxyde métallique MO(OH), M étant un métal, de préférence, choisi parmi un métal de transition ou un métal alcalin.

De préférence, le troisième précurseur est choisi parmi FeO, MnO, NiO, CoO, MnO₂, Li₂CO₃, Fe₂O₃, Mn₂O₃, Fe₃O₄, Mn₃O₄, Ni₃O₄, Co₃O₄, Na₂CO₃, FeC₂O₅, P₂O₅ et leurs hydrates.

Par définition, le frittage est un procédé de pressage à chaud d'une poudre pour obtenir un matériau. La poudre est chauffée dans un four à une température inférieure à la température de fusion du matériau jusqu'à ce que les particules de poudre adhèrent les unes aux autres, assurant ainsi la cohésion du matériau. Lorsque plusieurs poudres sont utilisées, le frittage assure l'adhésion des différents matériaux entre eux.

Le frittage activé par champ électrique aussi connu sous l'acronyme FAST (en anglais "Field Activated Sintering Technique") ou technique SPS (en anglais "Spark Plasma Sintering") ou frittage "flash" est une technique classique de mise en forme de matériaux, similaire au pressage conventionnel à chaud. Toutefois, ce dernier se différencie par une source de chauffe extérieure contrairement au SPS. Cette technique de mise en forme de poudres de matériaux est généralement utilisée pour obtenir rapidement des matériaux denses à microstructure fine qu'ils s'agissent de métaux, de céramiques, de polymères ou de composites.

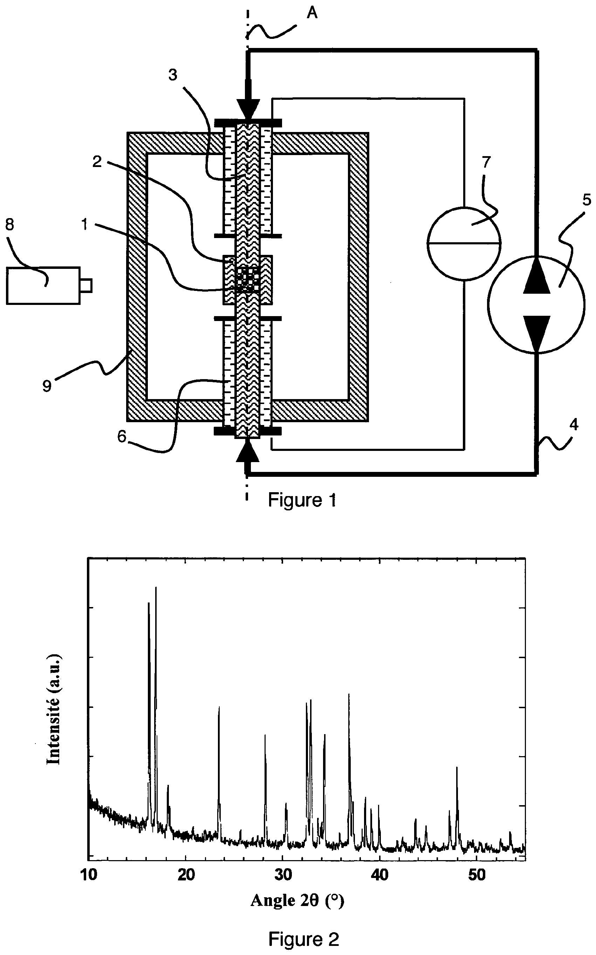

Comme représenté à la figure 1, lors de la mise en oeuvre de cette technique de frittage activé par champ électrique, les poudres 1 sont introduites dans une matrice de pressage 2. Une pression et un courant électrique continu, continu-pulsé, ou alternatif sont appliqués simultanément lors du frittage. Traditionnellement, la matrice de pressage 2 est, de forme annulaire, délimitée par une surface cylindrique et fermée au niveau de la base supérieure et inférieure (respectivement en haut et en bas à la figure 1) par deux pistons 3 constitués par le même matériau que la matrice de pressage 2. La poudre 1 est placée dans l'espace délimité par la matrice de pressage 2 et les deux pistons 3. Cet espace est généralement fermé de façon hermétique. Les pistons 3 sont reliés par un circuit hydraulique 4 à une presse hydraulique 5. Les pistons 3 sont généralement symétriques et positionnés de part et d'autre de la matrice de pressage 2 afin de pouvoir exercer une pression uni-axiale sur la poudre placée dans la matrice de pressage 2. Le courant peut être appliqué par l'intermédiaire d'au moins deux électrodes 6 reliées à un générateur de courant 7. Le courant traverse la matrice de pressage 2 conductrice et peut même, dans les cas appropriés, traverser l'échantillon de poudres 1. La matrice de pressage 2 agit ainsi en tant que source de chauffage, ce qui permet d'obtenir des vitesses de montée en température élevées. La température est classiquement mesurée par un pyromètre 8 optique ou infrarouge disposé à proximité de la matrice de pressage 2 (Figure 1). La matrice de pressage 2 est située dans une enceinte 9 intégrant des moyens de refroidissement (non représentés), classiquement des moyens de circulation d'eau, pour permettre le refroidissement de la matrice de pressage 2 après le traitement thermique.

Cette technique est connue pour former un matériau à forte densité à partir de précurseurs introduits sous forme de poudre, en limitant la réaction entre les précurseurs et en minimisant l'inter-diffusion des éléments constituant les précurseurs au sein du matériau. Etant donnés la vitesse de montée en température élevée et les temps de séjour à haute température relativement courts, la densification du matériau ne s'accompagne pas, ou très peu, de croissance cristalline.

Selon un mode de réalisation particulier, un procédé de synthèse d'un fluorophosphate métallique comporte un traitement thermique d'un mélange de précurseurs 1 solides dudit fluorophosphate métallique. Le mélange 1 est formé par au moins un premier précurseur à base de phosphate et au moins un second précurseur à base de fluor.

Le mélange de précurseurs 1 doit, de préférence, être homogène et est obtenu classiquement par broyage manuel ou automatique pendant une durée comprise entre 2 minutes et 60 minutes.

Le mélange de précurseurs 1 est ensuite placé dans la matrice de pressage 2. La matrice de pressage 2 est en matériau inerte vis-à-vis des précurseurs et conducteur électrique, de préférence en carbone graphite. La matrice de pressage 2 a, classiquement, une forme cylindrique d'un diamètre, avantageusement, compris entre 8 mm à 300 mm, à l'intérieur de laquelle peuvent coulisser les pistons 3 (figure1).

Comme représenté à la figure 1, la matrice de pressage 2 est ensuite disposée dans l'enceinte 9 entre les deux pistons 3 qui ferment la matrice de pressage 2.

Selon un mode de réalisation préférentiel, l'enceinte 9 est ensuite mise sous vide, de préférence, à une pression comprise entre 10⁻² Pa à 10 Pa.

Selon une variante, l'enceinte 9 est maintenue sous pression atmosphérique durant le procédé. Dans ce cas, l'enceinte 9 est soumise à une atmosphère non-oxydante, par exemple, de gaz neutre ou légèrement réducteur comme l'argon, l'hélium ou l'azote. En effet, lors du chauffage, l'oxygène de l'air peut provoquer une détérioration de la matrice de pressage 2 avec formation de dioxyde de carbone (CO₂).

Le mélange de précurseurs 1 est ensuite soumis à un traitement thermique. En particulier, le traitement thermique est un frittage activé par champ électrique durant lequel on applique au mélange de précurseurs 1, simultanément, une pression comprise entre 0,5MPa et 200MPa et un courant électrique chauffant le mélange 1 avec une vitesse moyenne d'élévation en température comprise entre 50°C/min⁻¹ et 600°C/min⁻¹.

Selon un mode de réalisation préférentiel, le frittage activé par champ électrique du mélange de précurseurs (1) comporte successivement une montée en pression jusqu'à une pression comprise entre 0,5MPa et 200MPa, de préférence entre 10MPa et 50MPa. La pression est atteinte en moins de 600 secondes, de préférence en moins de 120 secondes. La pression est exercée par l'intermédiaire des pistons 3 reliés à la presse hydraulique 5 et maintenue durant toute la durée du traitement thermique.

La pression est appliquée au mélange de précurseurs 1, de préférence, de façon uni-axiale, selon l'axe A (figure 1).

Le frittage activé par champ électrique comporte ensuite une montée en température jusqu'à une température comprise entre 300°C et 1000°C, de préférence entre 550°C et 750°C. La température est, avantageusement, inférieure à la température de fusion du produit de réaction. Cette montée rapide en température est réalisée, de préférence, par génération d'un courant pulsé de forte intensité.

Le courant pulsé peut être appliqué sous forme d'une séquence de séries de pulses de courant électrique, entrecoupées d'au moins une période sans courant, chaque pulse étant appliqué sur une période, avantageusement, comprise entre 1 à 10 ms.

Le mélange de précurseurs 1 est, avantageusement, soumis à un courant pulsé d'intensité comprise entre 100A et 50 000A, de préférence, entre 300A et 2 000A.

La température peut, avantageusement, être atteinte en moins de 20 minutes, la pression étant maintenue durant toute la durée de la montée en température.

Selon un autre mode de réalisation particulier, durant l'étape de frittage activé par champ électrique, la montée en température peut comporter plusieurs rampes en température. Les rampes en température correspondent chacune à une vitesse d'élévation en température comprise entre 50°C/min⁻¹ et 600°C/min⁻¹.

Une fois la température atteinte, la matrice de pressage 2 est immédiatement refroidie grâce aux moyens de refroidissement de l'enceinte 9, avec une vitesse de refroidissement comprise, avantageusement, entre 10°C.min⁻¹ et 600 °C.min⁻¹.

Selon une variante, le refroidissement peut être réalisé après un palier en température d'une durée avantageusement courte, de préférence, inférieure à 30 minutes.

De même, un palier en température peut également être présent après une rampe en température. La montée en température est alors constituée de plusieurs rampes en température et d'un ou plusieurs paliers. Néanmoins, chaque palier en température est préférentiellement de courte durée, en particulier, d'une durée inférieure à 10 minutes.

Avantageusement, la durée de l'étape de frittage activé par champ électrique est inférieure ou égale à 30 minutes et/ou la durée totale du procédé de synthèse, y compris le mélange initiale n'excède pas 1 heure, de préférence 30 minutes.

À l'issue du procédé de synthèse, on constate de façon surprenante, que les précurseurs du mélange 1 ont réagi entre eux pour former le fluorophosphate métallique correspondant. Ainsi, le frittage activé par champ électrique au lieu de densifier le mélange initial de poudres de précurseurs 1 et réaliser une mise en forme classique, provoque une réaction chimique des espèces présentes dans le mélange de précurseurs 1 pour former un nouveau composé, en l'espèce le fluorophosphate métallique. En d'autres termes, de façon tout à fait inattendue, une synthèse a lieu lors de ce procédé en même temps que la mise en forme du mélange de précurseurs 1. On obtient un fluorophosphate métallique sous forme densifiée qui pourra ultérieurement être mis en poudre selon tout procédé connu.

La synthèse du fluorophosphate métallique est réalisée suivant des schémas réactionnels connus. On peut néanmoins distinguer plusieurs voies de synthèse classique, la synthèse par réaction d'un phosphate métallique et d'un fluorure métallique selon la réaction générale (3) suivante :

Xₐ₋₁M_{b}(PO₄)_{c} + XF_{d} → XₐM_{b}(PO₄)_{c}F_{d} (3)

Dans laquelle M, X, a, b, c et d sont tels que définis précédemment dans la formule générale (1).

À titre d'exemple non-limitatif, le fluorophosphate de vanadium et de lithium (X=Li ; M=V ; a=1 ; c=1 ; d=1 dans la formule (3)) est obtenu à partir d'un phosphate de vanadium comme premier précurseur et d'un fluorure de lithium comme second précurseur selon la réaction (4) suivante :

LiF + VPO₄ → LiVPO₄F (4)

Lorsque dans la formule (3) a=0, le fluorophosphate métallique est dépourvu de X. Avec M=Co ; a=0 ; b=2 c=1 ; d=1 dans la formule (3), on peut par exemple obtenir un fluorophosphate de cobalt à partir de phosphate de cobalt et de fluorure de cobalt selon la réaction (5) suivante :

CoF₂+Co₃(PO₄)₂ → 2(Co₂PO₄F) (5)

Selon un autre exemple, avec X=Li ou Na ; M=Co ; a=2 ; b=1 ; c=1 ; d=1 dans la formule (3), on peut obtenir un fluorophosphate de cobalt et de lithium (ou de sodium) à partir de phosphate de cobalt et de lithium (ou de sodium) et de fluorure de lithium (ou de sodium) selon les réactions (6) et (7) suivantes :

LiF + LiCoPO₄ → Li₂CoPO₄F (6)

NaF + NaCoPO₄ → Na₂CoPO₄F (7)

Un autre schéma réactionnel de synthèse consiste à faire réagir un troisième précurseur avec le premier précurseur et le second précurseur. Le choix du troisième précurseur se portera, préférentiellement, sur les précurseurs qui n'entraînent pas ou peu de dégagements gazeux lors du traitement thermique.

À titre d'exemple, la synthèse d'un fluorophosphate de vanadium et de lithium peut être réalisée à partir de dihydrogénophosphate d'ammonium (DADHP), d'oxyde de vanadium et de fluorure de lithium selon les réactions (8) et (9) suivantes :

NH₄H₂PO₄ + 0,5V₂O₃ → VPO₄ + NH₃ + 1,5H₂O (8)

LiF + VPO₄ → LiVPO₄F (9)

Les réactions (8) et (9) peuvent, avantageusement, être mises en oeuvre durant l'étape de frittage activé par champ électrique du procédé de synthèse. Le procédé de synthèse du fluorophosphate métallique comporte, avantageusement, une étape unique de frittage activé par champ électrique durant laquelle les réactions (8) et (9) sont réalisées. La mise en oeuvre du procédé de synthèse est identique à celle décrite ci-dessus et comporte successivement le broyage de dihydrogénophosphate d'ammonium (DADHP), de fluorure de lithium et d'oxyde de vanadium correspondant respectivement au premier, second et troisième précurseurs, pour former un mélange de précurseurs 1 puis la mise en place du mélange de précurseurs 1 dans la matrice de pressage 2 suivie du frittage activé par champ électrique tel que décrit précédemment.

On peut citer, à titre d'exemple, la synthèse de fluorophosphate de cobalt et de sodium à partir d'hydrogénophosphate d'ammonium (ADHP) comme premier précurseur, de fluorure de sodium comme second précurseur et de carbonate de sodium et carbonate de cobalt comme troisièmes précurseurs selon les réactions (10) et (11) suivantes :

0,5Na₂CO₃ + CoCO₃ + (NH₄)₂HPO₄ → NaCoPO₄ + 2NH₃ + 1,5CO₂ +1,5 H₂O (10)

NaF + NaCoPO₄ → Na₂CoPO₄F (11)

Selon un autre mode de réalisation particulier, le procédé de synthèse de fluorophosphate métallique comporte une étape préalable de synthèse du phosphate métallique à partir d'au moins un phosphate d'ammonium ou de sodium et d'au moins un oxyde métallique, un hydroxyde métallique ou un carbonate métallique. Le phosphate d'ammonium est choisi, de préférence, parmi NH₄H₂PO₄, (NH₄)₂HPO₄ et NaNH₄HPO₄ et leurs hydrates. Le phosphate de sodium peut être, par exemple, NaH₂PO₄ ou ses hydrates. Ainsi, le premier précurseur introduit dans le mélange de précurseurs 1 peut provenir d'une synthèse préalable de phosphate métallique.

L'étape préalable de synthèse du phosphate métallique peut être un frittage activé par champ électrique réalisé dans des conditions similaires à ceux du fluorophosphate métallique décrit ci-dessus. Selon un mode de réalisation particulier, le procédé de synthèse peut comporter successivement un premier frittage activé par champ électrique pour former le phosphate métallique puis un second frittage activé par champ électrique pour former le fluorophosphate métallique.

Pour les synthèses produisant des dégagements gazeux (réactions 8 à 11), les produits gazeux seront, avantageusement, évacués selon tout procédé connu.

### Exemple 1:

0,279 g de phosphate de cobalt lithié LiCoPO₄ et 0,045 g de fluorure de lithium LiF sont broyés manuellement dans un mortier en agate pendant 20 minutes. Ce mélange 1 est ensuite placé dans une matrice de pressage 2 en carbone graphite 2333 de 8mm de diamètre, protégée par du Papyex (commercialisé par "Société Carbone Lorraine") et fermée par deux pistons 3 symétriques constitués du même matériau que la matrice de pressage 2.

Cette matrice 2 est ensuite introduite, à température ambiante, dans l'enceinte 9 d'une machine SPS (Spark Plasma Sintering) qui est mise sous un vide poussé ou vide secondaire (compris entre 1.10⁻² Pa et 6Pa). La synthèse a alors lieu en appliquant deux rampes, une rampe en pression et une rampe en température. Une pression de 25MPa est atteinte en une minute et maintenue pendant le reste du procédé de synthèse. Une température de 600°C est atteinte en 2 étapes : une première rampe en température, avec une vitesse d'élévation en température de 100°C.min⁻¹ pendant 5 minutes puis une seconde rampe en température, avec une vitesse d'élévation en température de 50°C.min⁻¹ pendant 2min. Ces première et seconde rampes en température sont obtenues par application de courants pulsés définis sur 14 périodes de 3,3ms, dont 12 périodes de pulses et 2 périodes de non pulse. La matrice de pressage 2 est ensuite refroidie au sein de l'enceinte 9 de la machine SPS. Une pastille est ainsi obtenue, polie sur papier abrasif puis broyée manuellement dans un mortier. On obtient une poudre de Li₂CoPO₄F homogène ayant une pureté de 96% en poids avec un rendement de 91%.

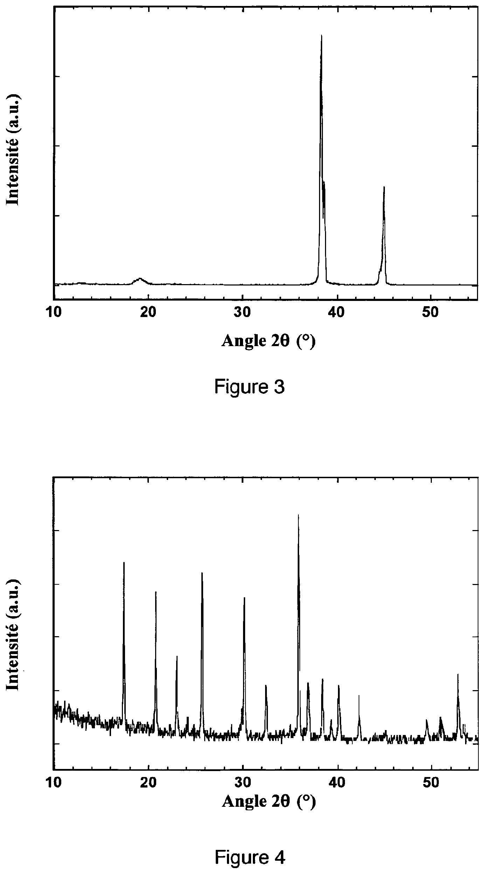

Le diffractogramme des rayons X de la poudre ainsi obtenue est représenté à la figure 2. On constate que les pics de diffraction correspondent aux pics caractéristiques du fluorophosphate de cobalt et de lithium. Les figures 3 et 4 correspondent aux diagrammes de diffraction X des précurseurs, respectivement le fluorure de lithium et le phosphate de cobalt et le lithium. En comparant les pics de diffraction caractéristiques de ladite poudre avec ceux des précurseurs, le fluorure de lithium et le phosphate de cobalt et de lithium, on constate que le produit issu de ce procédé de synthèse a une structure moléculaire différente. Lors du procédé de synthèse et notamment lors du frittage activé par champ électrique, les précurseurs ont effectivement été transformés en Li₂CoPO₄F et non uniquement mis en forme.

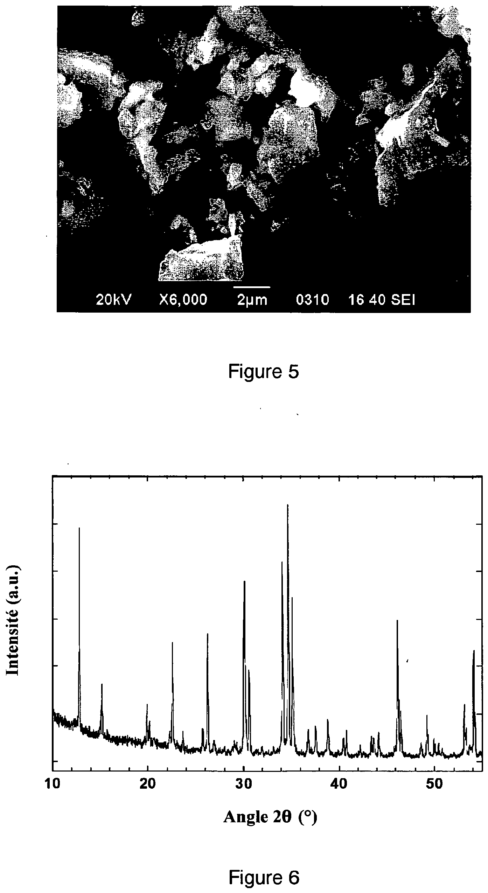

La figure 5 montre la morphologie du composé Li₂CoPO₄F.

### Exemple 2 :

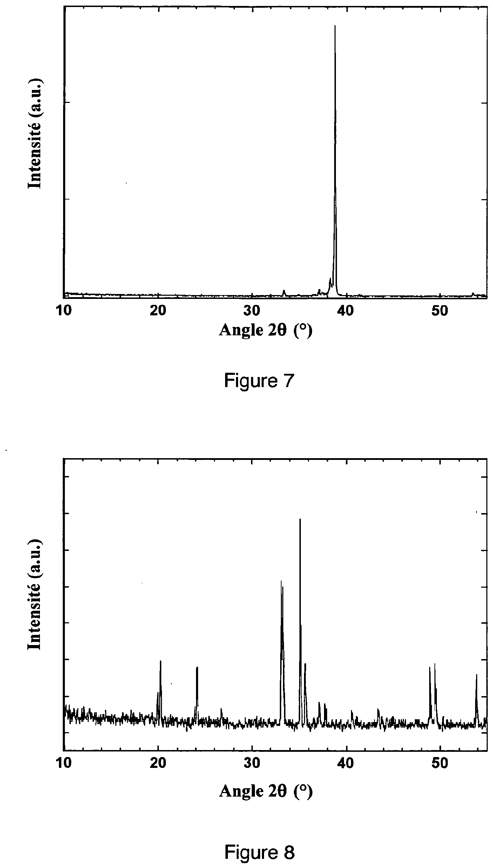

0,3233 g de phosphate de cobalt et de sodium, NaCoPO₄, est mélangé à 0,0767 g de fluorure de sodium, NaF. Les deux poudres sont broyées manuellement dans un mortier en agate pendant 20 minutes. Ce mélange de précurseurs 1 est soumis à un procédé de synthèse identique à celui décrit à l'exemple 1 à l'exception du fait que la température finale est de 680°C avec une première rampe en température à une vitesse de 100°C.min⁻¹ pendant 5 minutes et une seconde rampe en température à une vitesse de 50°C.min⁻¹ pendant 3 min 40. On obtient une poudre de Na₂CoPO₄F homogène ayant une pureté de 94% en poids avec un rendement de 90%.
Le diffractogramme des rayons X de la poudre ainsi obtenue est présenté figure 6. Comme pour l'exemple 1, en comparant les pics de diffraction, caractéristiques de ladite poudre à ceux du fluorure de sodium (figure 7) et du phosphate de cobalt et de sodium (figure 8), on constate que le produit issu du procédé de synthèse a une structure moléculaire différente de celle des précurseurs et correspond au fluorophosphate de cobalt et de sodium, Na₂CoPO₄F.

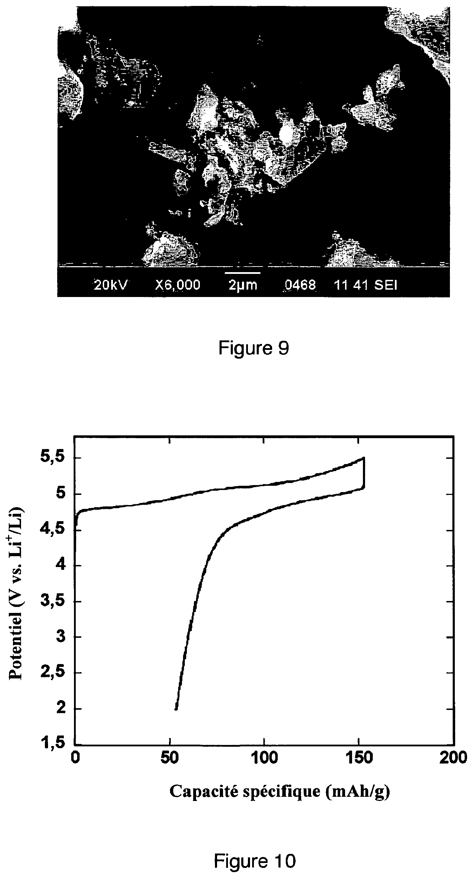

La figure 9 présente la morphologie des grains de Na₂CoPO₄F.

Le procédé de synthèse permet d'obtenir une poudre pure et homogène en composition, avec très peu ou pas de pertes de matière. On entend par pure et homogène en composition, une poudre ayant comme principal composant le fluorophosphate métallique, avec éventuellement une quantité négligeable d'impuretés i.e. inférieure à 10% en poids, de préférence inférieure ou égale à 5% en poids.

En effet, le procédé de synthèse du fluorophosphate métallique peut comporter différentes étapes de très courtes durées, notamment l'étape de frittage activé par champ électrique durant laquelle la réaction de synthèse a lieu. Ainsi, les pertes en précurseurs sont limitées, notamment pour le second précurseur à base de fluor qui est généralement un composé volatile.

Les fluorophosphates métalliques obtenus par le procédé de synthèse selon l'invention peuvent être utilisés comme matériau actif d'une électrode pour accumulateur, notamment au lithium ou au sodium, en particulier comme matériau actif d'une électrode positive. Plus particulièrement, l'électrode positive d'un accumulateur au lithium ou au sodium peut être sous la forme d'une dispersion intime comportant le composé fluorophosphate métallique synthétisé selon l'invention, un additif conducteur électronique et éventuellement un liant organique. Une telle dispersion est généralement déposée sur une feuille métallique servant de collecteur de courant. L'additif conducteur électronique peut être du carbone (fibres, nanotubes, plaquettes, particules sphériques,...) et le liant organique, destiné à apporter une bonne conduction ionique et une tenue mécanique satisfaisante, peut par exemple être constitué d'un polymère choisi parmi les polymères à base de méthacrylate de méthyle, d'acrylonitrile, de fluorure de vinylidène, ainsi que les polyéthers ou les polyesters.

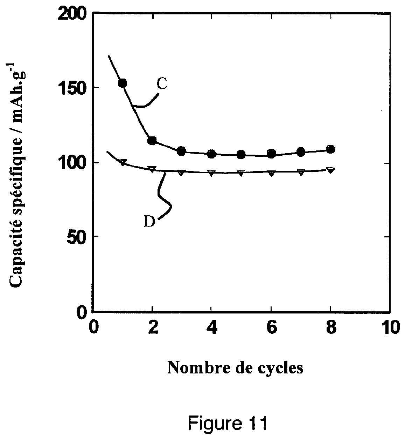

À titre d'illustration, un accumulateur au lithium de type Li-Ion de format "pile bouton" a été réalisé et testé (figures 10 et 11) en employant, comme matériau actif de l'électrode positive, le composé Li₂CoPO₄F synthétisé selon l'exemple 1.

Un tel accumulateur comporte ainsi :
- une électrode négative constituée d'un disque en lithium de 16 mm de diamètre et de 130 µm d'épaisseur qui est déposé sur un disque en Inox 316L servant de collecteur de courant,
- une électrode positive constituée d'un disque de 14 mm de diamètre et de 25 µm d'épaisseur comprenant le matériau de l'invention préparé selon l'exemple 1 précité (80 % en masse), du noir de carbone (10 % en masse) et de l'hexafluorure de polyvinylidène (10 % en masse) en guise de liant, l'électrode positive étant déposée sur un collecteur de courant en aluminium de 20 µm d'épaisseur,

- un séparateur imbibé d'un électrolyte liquide à base du sel LiPF₆ (1mol.l⁻¹) en solution dans un mélange de carbonate de propylène et de carbonate de diméthyle.

La figure 10 représente la courbe correspondant au premier cycle de charge/décharge de l'accumulateur au lithium décrit ci-dessus, à 20°C, sous un régime de C/10.

La figure 11 représente l'évolution de la capacité spécifique en charge (Courbe C) et en décharge (Courbe D) de l'accumulateur en fonction du nombre de cycles effectués. L'évolution des courbes C et D montre qu'après deux cycles, la capacité spécifique restituée en décharge est proche de celle délivrée en charge. De plus, au-delà de 8 cycles, les capacités spécifiques en charge et en décharge restent supérieures à 100 mAh.g⁻¹. Enfin, la valeur de la capacité spécifique en charge après un cycle est de l'ordre de 150 mAh.g⁻¹. Les résultats illustrés aux figures 10 et 11, mettent en évidence la possibilité d'extraire réversiblement une quantité importante d'ions lithium présents dans le matériau d'électrode positive.

De plus, les caractéristiques électrochimiques du composé de l'invention sont avantageuses par rapport à l'art antérieur, principalement en termes de tension de fonctionnement et de capacité spécifique restituée en décharge, avec une capacité théorique de 287 mAh.g⁻¹ et une tension de fonctionnement de 5V vs Li⁺/Li (Li₂Co²⁺PO₄F ⇆ Co⁴⁺PO₄F).

Le procédé de synthèse permet d'obtenir un fluorophosphate métallique présentant des performances électrochimiques améliorées, de sorte qu'il peut être utilisé efficacement comme matériau actif d'électrode pour accumulateur, en particulier au lithium ou de sodium. Un tel procédé est, en outre, simple à mettre en oeuvre et permet d'obtenir rapidement, en moins d'une heure, avantageusement, en moins de 30 minutes, des composés fluorophosphates métalliques variés, avec un rendement élevé. Le frittage activé par champ électrique est utilisé, dans le cadre de l'invention, pour la synthèse de fluorophosphates métalliques et non, selon une application habituelle de la technique de frittage activé par champ électrique, pour la consolidation ou la densification de poudres.

La rapidité de synthèse inhabituellement courte pour un matériau d'électrode d'accumulateur permet d'envisager une production du fluorophosphate métallique à l'échelle industrielle.

## Revendications

1. Procédé de synthèse d'un fluorophosphate métallique comprenant un métal alcalin choisi parmi le sodium (Na) et le lithium (Li) ou un mélange desdits métaux et un métal de transition choisi parmi Co, Ni, Fe, Cu, Mn, le procédé comportant un traitement thermique d'un mélange de précurseurs (1) solides dudit fluorophosphate métallique, formé par au moins un premier précurseur à base de phosphate et au moins un second précurseur à base de fluor,
procédé **caractérisé en ce que** le fluorophosphate métallique est de formule générale (2) :
X₂M'PO₄F (2)
dans laquelle :
X est le métal alcalin choisi parmi le sodium (Na) et le lithium (Li) ou un mélange desdits métaux ;
M' est le métal de transition choisi parmi Co, Ni, Fe, Cu, Mn,
X, M', PO₄, F étant choisis de façon à maintenir l'électroneutralité du fluorophosphate métallique,
et **en ce que** le traitement thermique est un frittage activé par champ électrique durant lequel on applique audit mélange, simultanément, une pression comprise entre 0,5MPa et 200MPa et un courant électrique chauffant ledit mélange (1) avec une vitesse moyenne d'élévation en température comprise entre 50°C/min⁻¹ et 600°C/min⁻¹ jusqu'à une température comprise entre 300°C et 1000°C, le second précurseur à base de fluor étant un fluorure métallique choisi parmi NaF, LiF, NH₄F, MnF₂, CoF₂, NiF₂, FeF₂, FeF₂ hydraté.

2. Procédé selon la revendication 1, **caractérisé en ce que** le mélange de précurseurs (1) est soumis à un courant pulsé d'intensité comprise entre 100A et 50 000A.

3. Procédé selon la revendication 2, **caractérisé en ce que** le courant pulsé a une intensité comprise entre 300A et 2 000A.

4. Procédé selon l'une quelconque des revendications 1 à 3, **caractérisé en ce que** la pression est comprise entre 10MPa et 50MPa.

5. Procédé selon l'une quelconque des revendications 1 à 4, **caractérisé en ce que** le frittage activé par champ électrique du mélange de précurseurs (1) comporte successivement :
- une montée en pression jusqu'à une pression comprise entre 0,5MPa et 200MPa, ladite pression étant atteinte en moins de 600 secondes, de préférence en moins de 120 secondes, et
- la montée en température jusqu'à une température comprise entre 300°C et 1000°C, la température étant atteinte en moins de 20 minutes et ladite pression étant maintenue durant toute la durée de la montée en température.

6. Procédé selon la revendication 5, **caractérisé en ce que** la montée en température comporte plusieurs rampes en température, lesdites rampes correspondant chacune à une vitesse d'élévation en température comprise entre 50°C/min⁻¹ et 600°C/min⁻¹.

7. Procédé selon l'une quelconque des revendications précédentes, **caractérisé en ce que** le fluorophosphate métallique est un fluorophosphate métallique mixte de cobalt, de préférence, choisi parmi Li₂CoPO₄F et Na₂CoPO₄F.

8. Procédé selon l'une quelconque des revendications précédentes, **caractérisé en ce que** le premier précurseur à base de phosphate est choisi parmi un phosphate métallique, un phosphate de sodium et un phosphate d'ammonium.

9. Procédé selon la revendication précédente, **caractérisé en ce que** le phosphate métallique est choisi parmi FePO₄, MnPO₄, Co₃(PO₄)₂, Li₃PO₄, LiFePO₄, LiCoPO₄, NaCoPO₄, LiMnPO₄, LiNiPO₄, et leurs hydrates.

10. Procédé selon la revendication 8, **caractérisé en ce que** le phosphate d'ammonium est choisi parmi NH₄H₂PO₄, (NH₄)₂HPO₄, NaNH₄HPO₄ et leurs hydrates.

11. Procédé selon l'une quelconque des revendications précédentes, **caractérisé en ce que** le mélange de précurseurs (1) comporte un troisième précurseur choisi parmi un oxyde métallique, un hydroxyde métallique, un acétate métallique, un carbonate métallique, un nitrate métallique, un sulfate métallique, un oxalate métallique et un oxohydroxyde métallique.

12. Procédé selon la revendication précédente, **caractérisé en ce que** le troisième précurseur est choisi parmi FeO, MnO, NiO, CoO, MnO₂, Li₂CO₃, Fe₂O₃, Mn₂O₃, Fe₃O₄, Mn₃O₄, Ni₃O₄, Co₃O₄, Na₂CO₃, FeC₂O₅, P₂O₅ et leurs hydrates.

13. Procédé selon l'une quelconque des revendications 8 à 12, **caractérisé en ce que** le procédé comporte une étape préalable de synthèse du phosphate métallique à partir d'au moins un phosphate d'ammonium ou de sodium et d'au moins un oxyde métallique, un hydroxyde métallique ou un carbonate métallique, ledit phosphate d'ammonium étant choisi parmi NH₄H₂PO₄, (NH₄)₂HPO₄, NaNH₄HPO₄ et leurs hydrates et ledit phosphate de sodium étant NaH₂PO₄ et ses hydrates.

14. Procédé selon la revendication précédente, **caractérisé en ce que** l'étape préalable de synthèse du phosphate métallique est un frittage activé par champ électrique.

## Patentansprüche

1. Verfahren zur Synthese eines Metallfluorphosphats, umfassend ein Alkalimetall, ausgewählt aus Natrium (Na) und Lithium (Li) oder einer Mischung der Metalle und einem Übergangsmetall, ausgewählt aus Co, Ni, Fe, Cu, Mn, wobei das Verfahren eine Wärmebehandlung einer Mischung aus festen Vorläufern (1) des Metallfluorphosphats umfasst, gebildet aus mindestens einem ersten Vorläufer auf Phosphatbasis und mindestens einem zweiten Vorläufer auf Fluorbasis,
wobei das Verfahren **dadurch gekennzeichnet ist, dass** das Metallfluorphosphat die allgemeine Formel (2) aufweist:
X₂M'PO₄F (2)
worin:
X das Alkalimetall ist, ausgewählt aus Natrium (Na) und Lithium (Li) oder einer Mischung der Metalle;
M' das Übergangsmetall ist, ausgewählt aus Co, Ni, Fe, Cu, Mn,
wobei X, M', PO₄, F derart ausgewählt sind, dass sie die Elektroneutralität des Metallfluorphosphats erhalten,
und dadurch, dass die Wärmebehandlung ein feldaktiviertes Sintern ist, in dessen Verlauf die Mischung mit einem Druck im Bereich zwischen 0,5 MPa und 200 MPa beaufschlagt wird und gleichzeitig ein elektrischer Strom angelegt wird, der die Mischung (1) mit einer mittleren Temperaturanstiegsrate im Bereich zwischen 50 °C/min⁻¹ und 600 °C/min⁻¹ bis auf eine Temperatur im Bereich zwischen 300 °C und 1.000 °C erwärmt, wobei der zweite Vorläufer auf Fluorbasis ein Metallfluorid ist, ausgewählt aus NaF, LiF, NH₄F, MnF₂, CoF₂, NiF₂, FeF₂, hydratisiertem FeF₂.

2. Verfahren nach Anspruch 1, **dadurch gekennzeichnet, dass** die Vorläufermischung (1) einem Impulsstrom mit einer Intensität im Bereich zwischen 100 A und 50.000 A ausgesetzt wird.

3. Verfahren nach Anspruch 2, **dadurch gekennzeichnet, dass** der Impulsstrom eine Intensität im Bereich zwischen 300 A und 2.000 A aufweist.

4. Verfahren nach einem der Ansprüche 1 bis 3, **dadurch gekennzeichnet, dass** der Druck im Bereich zwischen 10 MPa und 50 Mpa liegt.

5. Verfahren nach einem der Ansprüche 1 bis 4, **dadurch gekennzeichnet, dass** das feldaktivierte Sintern der Vorläufermischung (1) nacheinander umfasst:
- einen Druckanstieg bis auf einen Druck im Bereich zwischen 0,5 MPa und 200 MPa, wobei der Druck in weniger als 600 Sekunden, vorzugsweise in weniger als 120 Sekunden, erreicht wird, und
- den Temperaturanstieg bis auf eine Temperatur im Bereich zwischen 300 °C und 1.000 °C, wobei die Temperatur in weniger als 20 Minuten erreicht wird und der Druck während der gesamten Dauer des Temperaturanstiegs aufrechterhalten wird.

6. Verfahren nach Anspruch 5, **dadurch gekennzeichnet, dass** der Temperaturanstieg mehrere Temperaturrampen umfasst, wobei diese Rampen jeweils einer Temperaturanstiegsrate im Bereich zwischen 50 °C/min⁻¹ und 600 °C/min⁻¹ entsprechen.

7. Verfahren nach einem der vorhergehenden Ansprüche, **dadurch gekennzeichnet, dass** das Metallfluorphosphat ein mit Kobalt-Mischmetallfluorphosphat ist, vorzugsweise ausgewählt aus Li₂CoPO₄F und Na₂CoPO₄F.

8. Verfahren nach einem der vorhergehenden Ansprüche, **dadurch gekennzeichnet, dass** der erste Vorläufer auf Phosphatbasis ausgewählt ist aus einem Metallphosphat, einem Natriumphosphat und einem Ammoniumphosphat.

9. Verfahren nach dem vorhergehenden Anspruch, **dadurch gekennzeichnet, dass** das Metallphosphat ausgewählt ist aus FePO₄, MnPO₄, Co₃(PO₄)₂, Li₃PO₄, LiFePO₄, LiCoPO₄, NaCoPO₄, LiMnPO₄, LiNiPO₄ und Hydraten davon.

10. Verfahren nach Anspruch 8, **dadurch gekennzeichnet, dass** das Ammoniumphosphat ausgewählt ist aus NH₄H₂PO₄, (NH₄)₂HPO₄, NaNH₄HPO₄ und Hydraten davon.

11. Verfahren nach einem der vorhergehenden Ansprüche, **dadurch gekennzeichnet, dass** die Vorläufermischung (1) einen dritten Vorläufer umfasst, ausgewählt aus einem Metalloxid, einem Metallhydroxid, einem Metallacetat, einem Metallcarbonat, einem Metallnitrat, einem Metallsulfat, einem Metalloxalat und einem Metalloxohydroxid.

12. Verfahren nach dem vorhergehenden Anspruch, **dadurch gekennzeichnet, dass** der dritte Vorläufer ausgewählt ist aus FeO, MnO, NiO, CoO, MnO₂, Li₂CO₃, Fe₂O₃, Mn₂O₃, Fe₃O₄, Mn₃O₄, Ni₃O₄, Co₃O₄, Na₂CO₃, FeC₂O₅, P₂O₅ und Hydraten davon.

13. Verfahren nach einem der Ansprüche 8 bis 12, **dadurch gekennzeichnet, dass** das Verfahren einen vorausgehenden Schritt zur Synthese des Metallphosphats aus mindestens einem Ammonium- oder Natriumphosphat und mindestens einem Metalloxid, einem Metallhydroxid oder einem Metallcarbonat umfasst, wobei das Ammoniumphosphat ausgewählt ist aus NH₄H₂PO₄, (NH₄)₂HPO₄, NaNH₄HPO₄ und Hydraten davon und wobei das Natriumphosphat NaH₂PO₄ und Hydrate davon ist.

14. Verfahren nach dem vorhergehenden Anspruch, **dadurch gekennzeichnet, dass** der vorausgehende Schritt zur Synthese des Metallphosphats ein feldaktiviertes Sintern ist.

## Claims

1. Method of synthesis of a metal fluorophosphate comprising an alkaline metal selected among sodium (Na) and lithium (Li) or a mixture of said metals and a transition metal selected among Co, Ni, Fe, Cu, Mn, the method comprising a heat treatment of a mixture of solid precursors (1) of said metal fluorophosphate, formed by at least one first phosphate-containing precursor and at least one second fluorine-containing precursor,
method **characterized in that** the metal fluorophosphate has the following general formula (2):
X₂M'PO₄F (2)
in which:
X is the alkaline metal selected among sodium (Na) and lithium (Li) or a mixture of said metals;
M is the transition metal selected among Co, Ni, Fe, Cu, Mn, X, M', PO₄, F, being chosen in order to maintain the electroneutrality of the metal fluorophosphate,
and **in that** the heat treatment is an electric-field-activated sintering process during which it is applied to said mixture, simultaneously, a pressure between 0.5 MPa and 200 MPa and an electrical current heating said mixture with a mean temperature rising rate between 50°C/min⁻¹ and 600°C/min⁻¹ up to a temperature between 300°C and 1000°C, the second fluorine-containing precursor is a metal fluoride selected among NaF, LiF, NH₄F, MnF₂, CoF₂, NiF₂, FeF₂, hydrated FeF₂

2. Method according to claim 1, **characterized in that** the mixture of precursors (1) is submitted to a pulsed current with an intensity between 100 A and 50000 A.

3. Method according to claim 2, **characterized in that** the pulsed current has an intensity between 300 A and 2000 A.

4. Method according to any one of the claims 1 to 3, **characterized in that** the pressure is between 10 MPa and 50 MPa.

5. Method according to any one of the claims 1 to 4, **characterized in that** the electric-field-activated sintering process for the mixture of precursors (1) successively includes:
- a rise in pressure up to a pressure between 0.5 MPa and 200 MPa, said pressure being reached in less than 600 seconds, preferably in less than 120 seconds, and
- a rise in temperature up to a temperature between 300°C and 1000°C, the temperature being reached in less than 20 minutes and said pressure being maintained all along the rise in temperature.

6. Method according to claim 5, **characterized in that** the rise in temperature includes several temperature ramps, each said ramp corresponding to a temperature rising rate between 50°C/min⁻¹ and 600°C/min⁻¹.

7. Method according to claim 7, **characterized in that** the metal fluorophosphate is a mixed cobalt metal fluorophosphate, preferably selected among Li₂CoPO₄F and Na₂CoPO₄F.

8. Method according to any one of the claims 1 to 8, **characterized in that** the first phosphate-containing precursor is selected among a metal phosphate, a sodium phosphate and an ammonium phosphate.

9. Method according to preceding claim, **characterized in that** the metal phosphate is selected among FePO₄, MnPO₄, Co₃(PO₄)₂, Li₃PO₄, LiFePO₄, LiCoPO₄, NaCoPO₄, LiMnPO₄, LiNiPO₄, and their hydrates.

10. Method according to one of the claims 8, **characterized in that** the ammonium phosphate is selected among NH₄H₂PO₄, (NH₄)₂HPO₄, NaNH₄HPO₄ and their hydrates.

11. Method according to any one of the preceding claims, **characterized in that** the mixture of precursors (1) contains a third precursor selected among a metallic oxide, a metal hydroxide, a metal acetate, a metal carbonate, a metal nitrate, a metal sulfate, a metal oxalate and a metal oxohydroxide.

12. Method according to preceding claim, **characterized in that** the third precursor is selected among FeO, MnO, NiO, CoO, MnO₂, Li₂CO₃, Fe₂O₃, Mn₂O₃, Fe₃O₄, Mn₃O₄, Ni₃O₄, Co₃O₄, Na₂CO₃, FeC₂O₅, P₂O₅ and their hydrates.

13. Method according to any one of the claims 8 to 12, **characterized in that** the method includes a preliminary synthesis step for the metal phosphate from at least one ammonium or sodium phosphate and at least one metallic oxide, one metal hydroxide or one metal carbonate, said ammonium phosphate being selected among NH₄H₂PO₄, (NH₄)₂HPO₄, NaNH₄HPO₄ and their hydrates and said sodium phosphate being NaH₂PO₄ and its hydrates.

14. Method according to preceding claim, **characterized in that** the preliminary synthesis step for the metal phosphate is an electric-field-activated sintering process.
